# EUROPEAN PATENT SPECIFICATION

(11) **EP 2 219 462 B1**
(45) Date of publication and mention of the grant of the patent: **01.05.2019**
(21) Application number: 08834292.8
(22) Date of filing: 29.09.2008
(51) Int. Cl.: A23P 20/25, A23L 7/122, A23L 7/165, A21D 13/30, A23G 3/54

(54) **PARTICULATE FILLED EDIBLE PRODUCT AND PROCESS FOR MAKING**
MIT TEILCHEN GEFÜLLTES ESSBARES PRODUKT UND HERSTELLUNGSVERFAHREN DAFÜR
PRODUIT COMESTIBLE À GARNISSAGE PARTICULAIRE ET SON PROCÉDÉ DE FABRICATION

(30) Priority: 28.09.2007 US 975828 P
(43) Date of publication of application: 25.08.2010
(73) Proprietor: Kellogg Company, Battle Creek, MI 49016-3599 (US)
(72) Inventor: BELANGER, Michael, E., Richland MI 49083 (US); RUHLMAN, Maria, Denelle, Battle Creek MI 49017 (US); KINCAID, James, G., Battle Creek MI 49014-9529 (US); WILLOUGHBY, Christopher, Battle Creek 49015 (US)
(74) Representative: Monzón de la Flor, Luis Miguel
(86) International application number: PCT/US2008/078100
(87) International publication number: WO 2009/042994

(56) References cited:
- EP-A2- 1 295 528
- WO-A1-94/28727
- WO-A1-94/28727
- FR-A1- 2 766 671
- FR-A1- 2 865 903
- US-A- 2 693 419
- US-A- 3 366 484
- US-A- 5 176 936
- US-A- 5 176 936
- US-A- 6 165 530
- US-A1- 2006 246 195

## Description

### CROSS-REFERENCE TO RELATED APPLICATIONS

This application claims the benefit of United States Provisional Patent Application Serial No. 60/975,828 for a PARTICULATE FILLED EDIBLE PRODUCT AND PROCESS FOR MAKING, filed on September 28, 2007, which is hereby incorporated by reference in its entirety.

### BACKGROUND OF THE INVENTION

### 1. Field of the Invention

The present invention relates to an edible food product, more particularly to a particulate filled edible food product and a method of making the same.

### 2. Description of the Prior Art

Food products having an exterior shell component and a filler component can be desirable because they can possess more than one flavour or texture in a single piece. It is known to produce multi-component, filled food products by extrusion, hi extrusion, a concentric layer or layers are extruded around a core material. The core material is completely enclosed by the shell material. The U.S. Patent 3,764,715 (hereinafter the '715 patent) to Henthorn et al. discloses a process for making a ready-to- eat cereal piece in which a cereal dough is extruded around a syrup-like liquid, hi the method disclosed in the 715 patent, the extruded cereal dough completely encloses the syrup-like liquid.

U.S. Patent 3,366,484 (hereinafter the '484 patent) to Weiss et al. discloses a ready-to-eat cereal and a process for making the same. The ready-to-eat cereal comprises two layers of cooked dough forming a shell. A dough-fruit mixture, comprising crumbs of dough and particles of dried fruit are enclosed between the two layers of dough. Dough consisting primarily of wheat is cooked to have a moisture content of about 30%. A first portion of this cooked dough is run through a set of shredding rolls, and a first shredded sheet having a thickness of about .05 inch is laid down. A second portion of this cooked dough is ran through a set of shredding rolls and then broken down in a coarse grinding mill to form a batch of dough crumbs. Dried fruit particles having a particle size such that they would pass through a U.S. No. 12 screen are mixed with the dough crumbs and the dough-fruit mixture is spread over the first shredded sheet, A second shredded sheet, with the same dimensions as the first shredded sheet, is laid over the dough-fruit mixture. The same dough is used for first shredded sheet, dough crumbs, and second sheet of dough. The layered sheets are then cut to form a plurality of square biscuits. The biscuits are then dried to a moisture content of about 5%. Lastly the biscuits are toasted at 400° for 3 minutes to form the finished product. The '484 objective is to project the fruit within the shell to obtain a delectable product. Based on sheet thickness, composition, and moisture content a solid product would be formed with no puffing occurring between the first and second shredded sheets.
(i)] in US3366484 is disclosed a unit of a ready-to-eat breakfast cereal comprised of a toasted cereal dough shell surrounding a mixture comprised of crumbs of cooked dough mixed with particles of dried fruit.
ii)] In US2693419 is related to a breakfast cereal of the dry, crisp type which is generally serve with sugar and cold milk or cream. More particularly, it relates to a product of this type containing fruit and to a method for preparing the same.
iii)] In FR2766671 is disclosed a shelf stable food composition comprising a flour dough and an inner liner, characterized in that it comprises a coating capable of isolating said trim of said pulp, so as to enable cold storage of the together, said package being formed of at least two layers, namely a first layer constituting a mechanical barrier and at least a second layer forming a water barrier, and the layer mechanical barrier is made from a mixture of a binder (flour, starch) and fat (vegetable or animal oil).
iv)] In FR2865903 is disclosed a product which consists of a flat base of leavened dough, in the form of a 24 - 30 cm diameter disc 4 - 7 mm thick, a filling and an edible covering layer of puff pastry or pancake batter, with the edges of the covering layer joined to the base.
v)] In EP1295528 is disclosed a specially conceived to use as filling an essentially granular material, like for example cereals or dried fruits duly ground, the biscuit is structured based on two layers of biscuit proper, one upper and another lower, which are sealed to each other on all their perimeter configuring a closed pocket which holds in its interior the granular product, which is thereby duly retained, hidden from the exterior, with a clear differentiation of flavours between the two types of basic products which form part of the biscuit as a whole.

### SUMMARY OF THE INVENTION

The subject invention relates to a particulate filled edible product, according to claim 11, and a method of making the particulate filled edible product, according to claim 1. The edible product comprises an edible shell of dough that defines an enclosed cavity having a cavity volume. At least one edible food particulate is disposed within the cavity. The food particulate has a particulate volume that is less than the cavity volume and the at least one food particulate moves freely in the cavity.

### BRIEF DESCRIPTION OF THE DRAWINGS

The present invention will be readily appreciated in view of the following detailed description of an exemplary embodiment of the broader invention, accompanied by the following drawings:

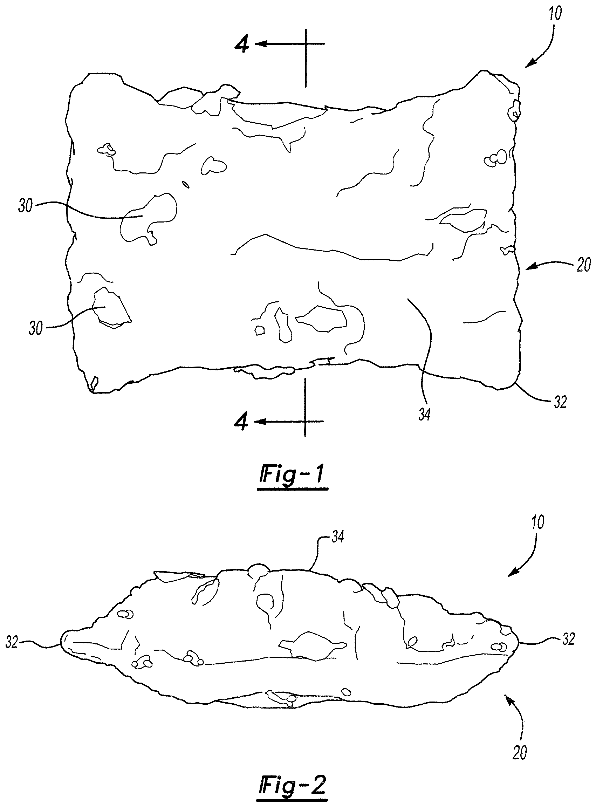

Figure 1 is top view of an edible item of the exemplary embodiment of the broader invention;
Figure 2 is a front view of the exemplary embodiment;

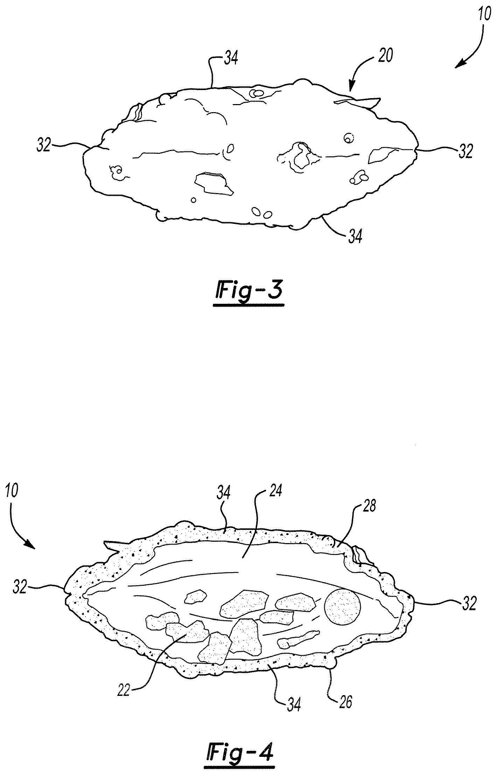

Figure 3 is a right-hand view of the exemplary embodiment;
Figure 4 is a cross-section taken along section lines 4 - 4 in Figure 1; and
Figure 5 is a simplified flow diagram illustrating the steps of an exemplary embodiment of the invention.

### DETAILED DESCRIPTION OF THE EXEMPLARY EMBODIMENT

An edible product 10 is an exemplary embodiment of the broader invention and includes an edible shell 20 and an edible food particulate 22. The shell 20 is hollow and defines a closed cavity 24 which has a volume. The food particulate 22 also has a volume and the volume of the food particulate 22 is less than the volume of the cavity 24. The food particulate 22 is disposed in the cavity 24 and is loosely enclosed by the puffed shell 20 so as to be free to move about the cavity 24. The particulate may be any shape known in the art.

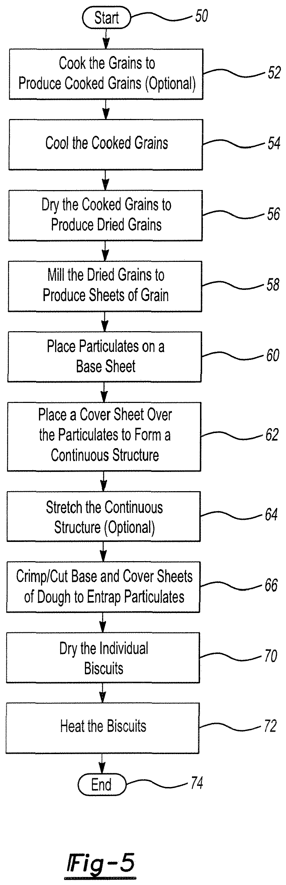

A method according to an exemplary embodiment of the invention is shown schematically in Figure 5. The method starts by preparing a pre-gelatinized sheet of dough. The degree of gelatinization will affect the capacity of the sheet to stretch without tearing. Factors that can affect the degree of gelatinization of the sheet include, without limitation, bran content, grain profile, starch content, fat content, sheet thickness, the mill profile, and the moisture content.

An exemplary method for making a sheet starts at step 50 and includes step 52 of cooking grains in water. The grains can be a mixture of corn and rice (for example brewers grits) at a level of 60 - 100% starch with cook moisture of 24 - 34%. The use of these grains can result in a strong and flexible sheet. The small brewers grits can eliminate hard spots in the finished product. Of course, other grains may be used in alternative embodiments of the invention, hi alternative embodiments of the invention, grains that contain bran, such as whole wheat, barley, proteinacious blends, or whole oats can be added to the mixture. However, these grains may weaken the sheet, produce holes in the dough, and result in a more fragile finished product, thus the amounts of whole wheat, barley and whole oats should be limited, but can be added. Further, the grains used are a parameter that must be considered when creating a puffed product. Some grains, such as corn and rice due to their starch content and profile are more easily puffed then grains such as whole wheat. Purified sources of starches known in the art may be used, including but not limited to, wheat starch and tapioca starch.

During cooking of the dough for making the exemplary sheet, the ferenacious grains absorb moisture and soften. The grain mixture can be cooked in a pressurized vessel. This cooking step is optional. Alternatively, the grain mixture may be cooked using other gelatinizing methods. At step 54, the grain mixture is cooled. In an exemplary embodiment, the com/rice mixture is cooled by convection with ambient air. However, the cooling can also be achieved by a cooling conveyor belt or by other suitable cooling methods.

At step 56, the cooled, moist grains are dried to remove a portion of the moisture. An exemplary moisture level range of the cooled, moist grains is about 24 - 30%. However, this range can vary based on other process parameters, hi an exemplary embodiment, the grain mixture is dried by convection with air, but drying can be achieved by a heated conveyor belt or by other suitable drying methods. At this time, the dried grains may be optionally cooled. At step 58, the dried grains are milled to form sheets of dough. The mills can be used to produce a mill pattern in at least one of the sheets of dough. Any mill pattern known in the art may be used.

The sheets are conveyed and/or split or folded to form a first or base sheet of dough and a second or cover sheet of dough, each having a thickness. An exemplary thickness for the sheets is 0.01 to 0.06 inches. In the preferred embodiment, the thickness of the sheet is approximately 0.015 to 0.04 inches. Thickness of the sheets is another parameter that must be considered when creating a puffed product. The thicker the sheet the more difficult puffing becomes. Each of the flat sheets contain a plurality of crimping portions 32 and cavity portions 34. The crimping portions 32 are at the perimeter of the shells 20 while the cavity portions 34 are portions of the flat sheets that will later puff during the heating step to form the cavity 24.

At step 60, at least one, but preferably a plurality of edible food particulates 22 are placed on the first sheet of dough formed in the milling step. The particulates 22 are randomly deposited on the first sheet of dough, hi one example, the particulates 22 can be arranged in lines with each of the lines running parallel the length of the base sheet. Additionally, the particulates 22 can be arranged such that rows of particulates 22 are formed perpendicular to the length of the first sheet. In other words, each of the particulates 22 can be aligned in one line and one row and the lines and rows can be perpendicular to one another. Alternatively, the particulates 22 can be arranged in other patterns.

In an exemplary embodiment, each of the particulates 22 is of a size less than the puffed volume of the cavity 24. By decreasing the volume of each particulate 22, a proportionately smaller cavity 24 in the shell 20 is required to loosely enclose the respective particulate 22. If a particulate 22 having a larger volume is utilized, a proportionately larger cavity 24 would have to be formed in the shell 20. While the particulate 22 may be any size and shape known in the art, in the preferred embodiment, the particulates 22 are of such size that they would pass through a U.S. No. 2 screen, but would sit on a U.S. No. 12 screen. In one example, the particulate 22 is a dehydrated blueberry. In the alternative, the particulate 22 could be another fruit, a nut, a ready-to- eat (RTE) cereal, cluster piece, baked cookie piece or any other suitable food product. A plurality of particles can be grouped together to be contained in a single shell 20. The shell 20 has the ability to protect certain said particulates 22 from alteration by heat if so desired. Subsequently, nutritionally enhanced/fortified ingredients may be protected from degradation if so desired.

At step 62, the second sheet or cover sheet of dough is placed over the placed particulates 22 and the first sheet as well. The second sheet can be substantially the same as the first sheet with respect to ingredients and process for making. The second sheet is placed on the first sheet so that the corresponding cavity portions 34 and crimping portions 32 of the first and second sheets are aligned. The result of step 62 is a continuous layered structure having a plurality of edible food particulates 22 disposed between the first and second sheets.

In the example, at step 64, the continuous layered structure is preferably stretched. This step can be desirable because the dough of the continuous structure will be kept taught and maintain the placement of the particulates 22. In an exemplary embodiment, the stretching is accomplished by setting the rotational speed of the rotary cutter slightly faster than the speed of the conveyor belt. As a result, the rotary cutter pulls the continuous structure forwardly thus stretching the continuous structure.

At step 66, the second sheet of dough is mechanically interlocked or crimped to the first sheet of dough around each of the particulates 22 in the crimping portion 32. At this time the sheets are severed. Once severed from the continuous structure, each of the dough-covered particulates 22 become individual discrete shaped biscuits or shells. In an exemplary embodiment, each biscuit has a base piece 26 of dough and a cover piece 28 of dough which are in crimped engagement with one another. During the severing process, each base piece 26 is severed from the first sheet and each cover piece 28 is severed from the second sheet.

The crimping and the severing may be accomplished by utilizing a rotary cutter. The rotary cutter includes a rotating dram with a plurality of shaped dies protruding therefrom. As the continuous structure is moved into the rotary cutter on a conveyor belt, the drum rotates downwardly toward the conveyor belt thus pressing the dies into and through the continuous structure. The crimping is performed as the die presses the second sheet into the first sheet and the severing is performed as the die engages the conveyor belt, i.e. as the die cuts through the dough. A roller having a fiat surface may be used instead of the conveyor belt. In such as system the rotating drum and roller would rotate together to pull the first and second sheets through the rotary cutter. As the first and second sheets are pulled through the rotary cutter the drum would rotate to press the dies into and through the continuous structure. The crimping is performed as the die presses the second sheet into the first sheet and the severing is performed as the die engages the roller, i.e. as the die cuts through the dough. In the exemplary embodiment of the invention, the combination of the square shaped dies and the stretching performed at step 64 result in a pillow shaped biscuit. Any shaped die known in the art may be used to achieve the desired shape of the biscuit.

At step 70, the individual biscuits are dried and become firmer. In an exemplary embodiment, the biscuits are dried by convection with heated air. Alternatively, the drying can be achieved by a heated conveyor belt or by other suitable heating methods known in the art. An exemplary final moisture level range of the dough of the dried biscuits is about 6% to 15%, preferably 10% to 12%. However, this range can vary based on other process parameters. The moisture content prior to heating is a parameter in allowing for a puffed product. A moisture content that is too low, i.e., about 5% will not result in a puffed product.

At step 72, the dried biscuits are heated to puff the outer surfaces. During this step, the moisture remaining in the dough causes the base piece 26 and the cover piece to move apart, expanding the biscuit to form a shell and the cavity 24. The at least one particulate 22 is now loosely enclosed in the cavity 24 and moves freely in the cavity. Step 72 can also result in blisters 30 being formed on the outer surfaces of the biscuits. Additionally, the outer surfaces can become darker, or browned. The final color of the biscuits can be a golden brown. The combination of the blistering and browning significantly reduces the appearance of the mill pattern left by the milling process. As a result, the puffed biscuits take on a fried appearance despite the fact that they have been baked. This appearance can be desirable to consumers. Additionally, the puffing results in a more crunchy texture. In one example, the heating is accomplished via a fluidized bed oven, and the targeted final moisture content of the finished biscuit is 2% - 6%. The method ends at step 74.

In addition to fluidized puffing, the biscuits could be deep-fried in hot oil. Applying to deep-frying to make an alternative embodiment of the invention may require varying the components and parameters of the sheets of dough. For example, biscuits can be formed from dough having a quantity of starch, by dry basis, of 30% - 100% and this may result in a dough more suited to deep-frying. These quantities of starch can also be used to practice an embodiment of the invention that is baked as well. Also, the thickness of the sheets of dough can be varied from .010 - .060 of an inch.

Further, an additive may be applied to an outer surface of the shell after the heating step. The additive is at least one of frosting, vitamins, edible particulates, flavouring, artificial sweeteners, or colouring. In an exemplary embodiment, a vitamin belt may be used in applying the additive. A sprayer could be used to apply the additive as the puffed shell moves along the vitamin belt.

The above described method is advantageous in that it provides for a puffed product having a particulate disposed therein, in addition to providing a product desirable to consumers, the shell also protects the food particulate from alteration by heat such that overall taste, flavor and nutritional quality of the at least one food particulate is not degraded.

The foregoing invention has been described in accordance with the relevant legal standards, thus the description is exemplary rather than limiting in nature. Accordingly, the scope of legal protection afforded this invention can only be determined by studying the following claims.

## Claims

1. A method for forming an edible product comprising the steps of:
producing first and second sheets of dough;
disposing a plurality of edible food particulates on the first sheet of dough;
covering the first sheet of dough with the second sheet of dough; crimping and cutting the first and second sheets of dough with the rotary cutter to enclose the plurality of edible food particulates and create a biscuit; and
heating and puffing the biscuit to define an enclosed cavity having a cavity volume for enclosing the plurality of edible food particulates in the cavity and allowing each of the plurality of edible food particulates to move freely in the cavity;
wherein the food particulates have a particulate volume that is less than the volume of the cavity and the food particulates move freely in the cavity.

2. The method of claim 1 further comprising the step of:
cooking a cereal grain mixture to a moisture content of about 24 - 34% prior to the producing first and second sheets of dough step.

3. The method of claim 1 wherein the producing first and second sheets of dough step is further defined as forming first and second sheets of dough, each having a thickness of about 0.01 to 0.06 inches.

4. The method of claim 1 further comprising the step of:
drying the first and second sheets of dough to a moisture content of about 6%-15% prior to the heating step.

5. The method of claim 1 further comprising the step of:
drying the first and second sheets of dough to a moisture content of about 10%-12% prior to the heating step.

6. The method of claim 1 further comprising the step of:
applying an additive to an outer surface of the biscuit after the heating step.

7. The method of claim 6 wherein the additive is at least one of frosting, vitamins, edible particulates, flavouring, or colouring.

8. The method of claim 1 wherein the plurality of edible food particulates will not pass through a U.S. No. 12 screen.

9. The method of claim 1 wherein the disposing step is further defined as disposing at least one of fruit, nuts, a ready-to-eat cereals, cluster pieces, or baked cookie pieces on the first sheet of dough.

10. The method of claim 1 wherein the heating and puffing the biscuit step is further defined as heating the biscuit to form a blister-like outer surface on the biscuit.

11. An edible product obtained ty the process of any one of claims 1-10 comprising:
a puffed biscuit having an enclosed cavity having a cavity volume, defined by a first sheet of dough and a second sheet of dough crimped to the first sheet of dough; and
a plurality of edible food particulates disposed within said cavity and having a particulate volume being less than the cavity volume and the plurality of edible food particulates moving freely in said cavity of the puffed biscuit.

12. The edible product as set forth in claim 11 wherein said plurality of edible food particulates will not pass through a U.S. No. 12 screen.

13. The edible product as set forth in claim 11 wherein the plurality of edible food particulates is at least one of fruit, nuts, ready-to-eat cereals, cluster pieces, or baked cookie pieces.

## Patentansprüche

1. Verfahren zum Formen eines essbaren Produkts, das folgende Schritte umfasst:
- Herstellen von ersten und zweiten Teigblättern;
- Anordnen einer Vielzahl von essbaren Lebensmittelteilchen auf das erste Teigblatt;
- Bedecken des ersten Teigblatts mit dem zweiten Teigblatt;
- Andrücken und Schneiden des ersten und des zweiten Teigblatts mit dem Rollschneider, um die Vielzahl von essbaren Lebensmittelteilchen einzuschließen und einen Keks zu erzeugen; und
- Erhitzen und Aufblähen des Kekses, um einen geschlossenen Hohlraum mit einem Hohlraumvolumen zu definieren, um die Vielzahl von essbaren Lebensmittelteilchen im Hohlraum einzuschließen und die freie Bewegung jedes der Vielzahl von essbaren Lebensmittelteilchen im Hohlraum zu ermöglichen;
wobei die Lebensmittelteilchen ein Teilchenvolumen aufweisen, das kleiner ist als das Volumen des Hohlraums, und die Lebensmittelteilchen sich im Hohlraum frei bewegen.

2. Verfahren nach Anspruch 1, das weiterhin folgenden Schritt umfasst:
- Backen eines Getreidekorngemisches vor dem Schritt des Herstellens von ersten und zweiten Teigblättern bis auf einen Feuchtigkeitsgehalt von etwa 24 bis 34 %.

3. Verfahren nach Anspruch 1, wobei der Schritt des Herstellens von ersten und zweiten Teigblättern weiter durch das Formen von ersten und zweiten Teigblättern definiert ist, die jeweils eine Dicke von etwa 0,254 mm (0,01 Zoll) bis 1,524 mm (0,06 Zoll) aufweisen.

4. Verfahren nach Anspruch 1, das weiter folgenden Schritt umfasst:
- Trocknen der ersten und zweiten Teigblätter vor dem Schritt des Erhitzens bis auf einen Feuchtigkeitsgehalt von etwa 6 bis 15 %.

5. Verfahren nach Anspruch 1, das weiter folgenden Schritt umfasst:
- Trocknen der ersten und zweiten Teigblätter vor dem Schritt des Erhitzens bis auf einen Feuchtigkeitsgehalt von etwa 10 bis 12 %.

6. Verfahren nach Anspruch 1, das weiter folgenden Schritt umfasst:
- Auftragen eines Zusatzstoffes auf eine Außenfläche des Kekses nach dem Schritt des Erhitzens.

7. Verfahren nach Anspruch 6, wobei der Zusatzstoff mindestens einer aus Glasur, Vitaminen, essbaren Teilchen, Geschmacksstoffen oder Farbstoffen ist.

8. Verfahren nach Anspruch 1, wobei die Vielzahl von essbaren Lebensmittelteilchen nicht durch ein U.S.-Sieb Nr. 12 passt.

9. Verfahren nach Anspruch 1, wobei der Schritt des Anordnens weiter durch das Anordnen von mindestens einem aus Früchten, Nüssen, genussfertigen Getreidezubereitungen, Streusel oder gebackenen Plätzchenstückchen auf dem ersten Teigblatt definiert ist.

10. Verfahren nach Anspruch 1, wobei der Schritt des Erhitzens und Aufblähens des Kekses weiter durch das Erhitzen des Kekses definiert ist, um eine blisterähnliche Außenfläche auf dem Keks zu bilden.

11. Essbares Produkt, das mit dem Verfahren nach einem der Ansprüche 1-10 erhalten wird, umfassend:
- einen aufgeblähten Keks, der einen geschlossenen Hohlraum mit einem Hohlraumvolumen aufweist, der durch ein erstes Teigblatt und ein zweites Teigblatt, das an das erste Teigblatt angedrückt ist, definiert ist; und
- eine Vielzahl von essbaren innerhalb des Hohlraums angeordneten Lebensmittelteilchen, die ein Teilchenvolumen aufweisen, das kleiner ist als das Hohlraumvolumen, wobei sich die Vielzahl von essbaren Lebensmittelteilchen in dem Hohlraum des aufgeblähten Kekses frei bewegt.

12. Essbares Produkt nach Anspruch 11, wobei die Vielzahl von essbaren Lebensmittelteilchen nicht durch ein U.S.-Sieb Nr. 12 passt.

13. Essbares Produkt nach Anspruch 11, wobei die Vielzahl von essbaren Lebensmittelteilchen mindestens eines aus Früchten, Nüssen, genussfertigen Getreidezubereitungen, Streusel oder gebackenen Plätzchenstückchen ist.

## Revendications

1. Procédé de fabrication d'un produit comestible comprenant les étapes consistant à :
- réaliser les première et seconde feuilles de pâte ;
- disposer une pluralité de particules alimentaires comestibles sur la première feuille de pâte ;
- couvrir la première feuille de pâte avec la seconde feuille de pâte ; pincer et découper les première et seconde feuilles de pâte avec la roulette à découper pour enfermer la pluralité de particules alimentaires comestibles et créer un biscuit ; et
- chauffer et feuilleter le biscuit pour définir une cavité close ayant un volume de cavité pour enfermer la pluralité de particules alimentaires comestibles dans la cavité et permettre à chacune des particules de la pluralité de particules alimentaires comestibles de bouger librement dans la cavité ;
dans lequel les particules alimentaires ont un volume de particules qui est inférieur au volume de la cavité et les particules alimentaires bougent librement dans la cavité.

2. Le procédé de la revendication 1 comprenant en outre l'étape consistant à :
faire cuire un mélange de céréales jusqu'à une teneur en humidité d'environ 24 - 34% avant l'étape de réalisation des première et seconde feuilles de pâte.

3. Le procédé de la revendication 1 dans lequel l'étape de réalisation des première et seconde feuilles de pâte est en outre définie comme étant celle de réalisation des première et seconde feuilles de pâte, chacune d'elle ayant une épaisseur d'environ 0,254 à 1,524 mm (0,01 à 0,06 pouces).

4. Le procédé de la revendication 1 comprenant en outre l'étape consistant à :
faire sécher les première et seconde feuilles de pâte jusqu'à une teneur en humidité d'environ 6 - 15% avant l'étape de chauffage.

5. Le procédé de la revendication 1 comprenant en outre l'étape consistant à :
faire sécher les première et seconde feuilles de pâte jusqu'à une teneur en humidité d'environ 10 - 12% avant l'étape de chauffage.

6. Le procédé de la revendication 1 comprenant en outre l'étape consistant à :
appliquer un additif sur une surface externe du biscuit après l'étape de chauffage.

7. Le procédé de la revendication 6 dans lequel l'additif est au moins l'un de ceux-ci : glaçage, vitamines, particules comestibles, arôme ou colorant.

8. Le procédé de la revendication 1 dans lequel la pluralité de particules alimentaires comestibles ne passera pas à travers un crible É.-U. N° 12.

9. Le procédé de la revendication 1 dans lequel l'étape de disposition est en outre définie comme étant celle où est disposée au moins l'une de ces catégories d'ingrédients : fruits, fruits à coque, céréales prêtes à être consommées, morceaux de rochers ou morceaux de cookies cuits au four sur la première feuille de pâte.

10. Le procédé de la revendication 1 dans lequel l'étape de chauffage et feuilletage du biscuit est en outre définie comme étant celle où le biscuit est chauffé pour former une surface externe semblable à une cloque sur le biscuit.

11. Produit comestible obtenu selon le procédé de l'une quelconque des revendications 1 à 10 comprenant :
un biscuit feuilleté possédant une cavité close ayant un volume de cavité, défini par une première feuille de pâte et une seconde feuille de pâte pincée sur la première feuille de pâte ; et
une pluralité de particules alimentaires comestibles disposées à l'intérieur de ladite cavité et ayant un volume de particules qui est inférieur au volume de la cavité et la pluralité de particules alimentaires comestibles bougent librement dans ladite cavité du biscuit feuilleté.

12. Le produit comestible tel que présenté dans la revendication 11, dans lequel ladite pluralité de particules alimentaires comestibles ne passera pas à travers un crible É.-U. N° 12.

13. Le produit comestible tel que présenté dans la revendication 11, dans lequel la pluralité de particules alimentaires comestibles est au moins l'une de ces catégories d'ingrédients : fruits, fruits à coque, céréales prêtes à être consommées, morceaux de rochers ou morceaux de cookies cuits au four.
